# EUROPÄISCHE PATENTSCHRIFT

(11) **EP 0 603 536 B1**
(45) Veröffentlichungstag und Bekanntmachung des Hinweises auf die Patenterteilung: **22.01.1997**
(21) Anmeldenummer: 93118424.6
(22) Anmeldetag: 15.11.1993
(51) Int. Cl.: B62D 21/12

(54) **Kraftfahrzeug mit die Karosserie versteifenden Elementen**
Motor-vehicle with body strengthening assemblies
Véhicule à moteur avec éléments de renfort de la carrosserie

(30) Priorität: 24.12.1992 DE 4244216
(43) Veröffentlichungstag der Anmeldung: 29.06.1994
(73) Patentinhaber: Dr.Ing. h.c. F. Porsche Aktiengesellschaft, D-70435 Stuttgart-Zuffenhausen (DE)
(72) Erfinder: Kohlmeier, Hans-Heinrich, W-97509 Kolitzheim (DE); Gerber, Fritz, D-74399 Walheim (DE)

(56) Entgegenhaltungen:
- EP-A- 0 295 662
- DE-A- 4 030 921
- DE-C- 592 840
- DE-C- 1 177 016
- US-A- 1 948 744
- US-A- 2 047 336
- US-A- 2 177 896

## Beschreibung

Die Erfindung bezieht sich auf ein Kraftfahrzeug nach dem Oberbegriff des Anspruchs 1.

Es ist aus der DE-39 05 650 C1 eine selbsttragende Kraftfahrzeugkarosserie bekannt, die zur Erhöhung der Torsionssteifigkeit Streben am Unterboden aufweist, die zumindest mit einem Ende am Längsträger befestigt sind und mit ihrem abgekehrten Ende am Unterboden festgelegt werden.

Aus der DE 11 77 016 ist ein am Fahrzeugoberbau elastisch aufgehängter Hilfsrahmen bekannt, der V-förmig ausgebildete Teilrahmen umfasst, die miteinander verbunden sind und der aus einem ersten horizontalen Teilrahmen mit einem zu diesem schräg angestellten weiteren Teilrahmen besteht. Im zusammentreffenden Bereich der Teilrahmen sind diese über einen Querträger miteinander verbunden. Die abgekehrten Enden der Teilrahmen weisen Querträger auf, die über mehrere Verbindungspunkte an der Karosserie befestigt sind.

Aufgabe der Erfindung ist es, ein Kraftfahrzeug zu schaffen, bei dem über versteifende Elemente eine optimale Torsionssteifigkeit des Aufbaues und eine definierte Abstützung einer Radaufhängung gewährleistet ist.

Diese Aufgabe wird durch die kennzeichnenden Merkmale des Anspruchs 1 gelöst. Weitere vorteilhafte Merkmale beinhalten die Unteransprüche.

Die mit der Erfindung hauptsachlich erzielten Vorteile bestehen darin, daß über zwei miteinander verbundene Verstrebungen, die in unterschiedlichen Ebenen angeordnet sind, sowohl in baulich einfacher Weise eine gewünschte Torsionssteifigkeit als auch eine Abstützung einer Radaufhängung an seitlichen Trägerteilen erfolgen kann. Diese sind vorzugsweise zwischen der Verstrebung und einem Längsträger des Fahrzeugaufbaues gehalten und abgestützt.

Die Verstrebungen sind V-förmig ausgebildet, wobei die erste Verstrebung in einer horizontalen Ebene und die zweite Verstrebung sich in einer vertikalen Querebene erstreckt und beide Verstrebungen miteinander verbunden sind. Die Verstrebungen bestehen aus profilierten Streben, Rohren oder dgl. und sind jeweils mit ihrem einen Ende am Längsträger befestigt. Die anderen, die Spitze des V bildenden Enden der Streben sind unmittelbar miteinander verbunden. Die Verstrebungen können je nach Bedarf zur Erzielung einer Torsionssteifigkeit im Hinter- und Vorderwagen als auch nur im Hinterwagen oder nur im Vorderwagen vorgesehen sein. Die Streben erstrecken sich von der Fahrzeugmittenlängsachse divergierend zu den Längsträgern.

Es ist zur Abstützung der Lenker einer Radaufhängung je Fahrzeugseite ein sich in Fahrzeuglängsrichtung erstreckendes Trägerteil vorgesehen. Dies ist an seiner Unterseite mit der horizontalen Verstrebung und mit seiner Oberseite am Längsträger verbunden. Zur Querabstützung ist zwischen den seitlichen Trägerteilen ein Querträger und zwischen den Streben kann eine Querstange vorgesehen. Diese Querstange ist nur dann angeordnet, wenn die Streben der horizontalen Verstrebung eine Abknickung aufweisen.

Die Trägerteile sind U-förmig ausgeführt, derart, daß eine Radantriebswelle zwischen vertikalen Schenkeln durchführbar ist und der verbleibende Steg mit der horizontalen Verstrebung verschraubbar ist. In oder an den Schenkeln der Trägerteile sind jeweils Aufnahmen für Lager von Lenkern einer Radaufhängung vorgesehen. Diese Aufnahmen sind integrierender Bestandteil des Trägerteils.

Damit die Anordnung eines Antriebsaggregates im Fahrzeug ungehindert von den Verstrebungen vorgenommen werden kann, weist die horizontale Verstrebung geknickte Streben auf, die in der Knickstelle dann über die Querstange abgestützt sind. Diese kann aus einem Hohlprofil, einem Rohr oder aus einem profilierten Vollmaterial bestehen.

Das Trägerteil weist zur Befestigung der freien Enden des Querträgers Aufnahmen auf, in denen die abgekröpften Enden über Schrauben befestigt werden. Das Trägerteil kann aus einem Guß oder aus einem Blechpressteil bestehen.

Ein Ausführungsbeispiel der Erfindung ist in der Zeichnung dargestellt und wird im folgenden näher beschrieben.

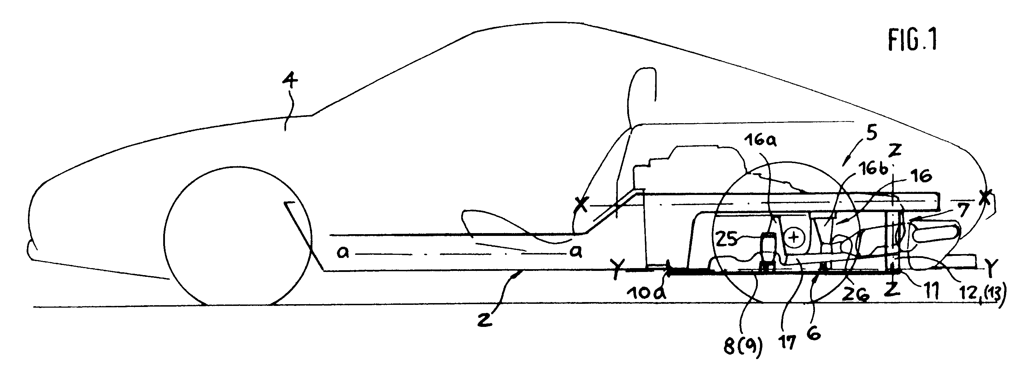

Es zeigen
- Fig. 1: eine Seitenansicht der Verstrebungen nur im Heck eines Fahrzeugs,
- Fig. 2: eine Draufsicht zu Fig. 1, wobei auch mögliche vordere Verstrebungen strichpunktiert dargestellt sind,
- Fig. 3: eine Vorderansicht zu Fig. 1,
- Fig. 4: eine vergrößerte Darstellung des seitlichen Trägerteils in einer Seitenansicht,

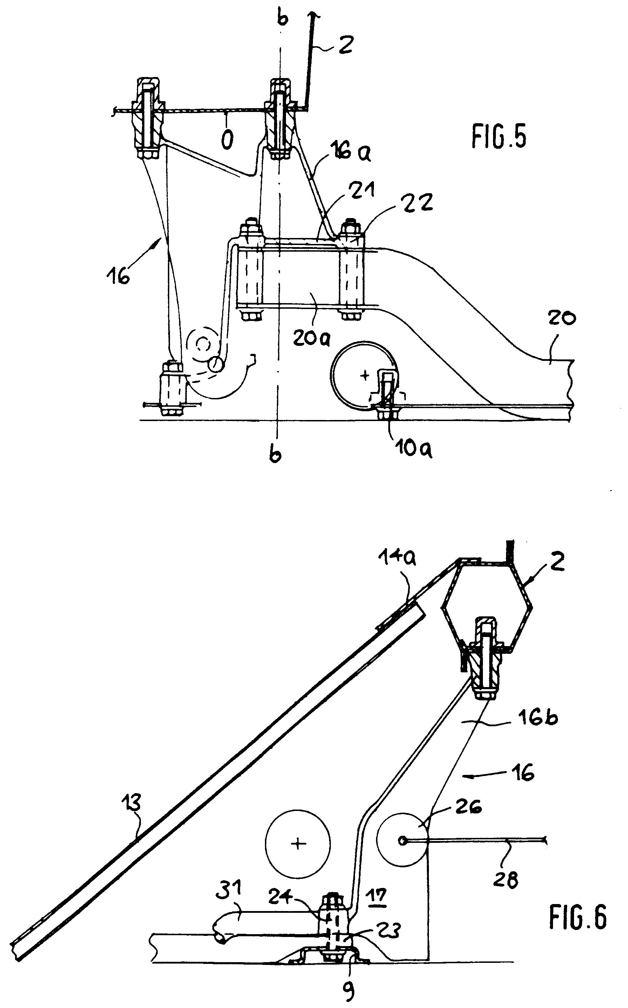

- Fig. 5: eine vergrößerte Darstellung der Verbindung zwischen Trägerteil und Querträger in einem Schnitt V-V nach Fig. 4,
- Fig. 6: eine vergrößerte Darstellung der Verbindung Trägerteil, zweite Verstrebung und erste Verstrebung in einem Schnitt VI-VI nach Fig. 4 und

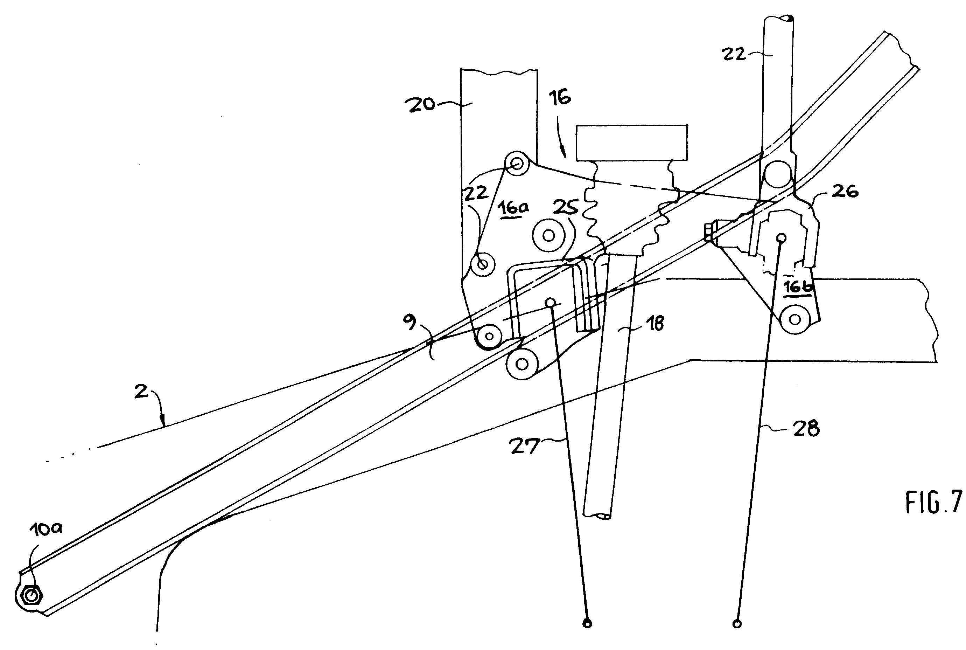

- Fig. 7: eine vergrößerte Darstellung der Verbindung Trägerteil mit der ersten Verstrebung sowie den Lenkern einer Radaufhängung in einer Draufsicht.

Ein Kraftfahrzeug weist im wesentlichen eine Aufbaustruktur mit Längsträgern 1, 2 sowie einem Bodenteil 3 und einer Karosserie 4 auf. Die Längsträger 1, 2 sind im Fahrzeugheck 5 mit einer Abkröpfung in Höhen- und Längsrichtung versehen, so daß die Enden der Längsträger 1, 2 in einer höhergelegenen Ebene X-X als die Längsträger im Mittenbereich des Fahrzeugs angeordnet sind.

Die Aufbaustruktur ist über Verstrebungen 6 und 7 im Heck und/oder im Vorderwagen des Fahrzeuges zur Erzielung einer optimalen Torsionssteifigkeit versteift. Die Verstrebungen 6 und 7 bestehen aus V-förmig zueinander angestellten Einzelstreben 8,9 und 12,13, Stangen oder Profilen oder dgl. Mittel. Die eine Verstrebung 6 ist in einer horizontalen Längsebene Y-Y und die weitere Verstrebung 7 ist in einer vertikalen Querebene Z-Z angeordnet.

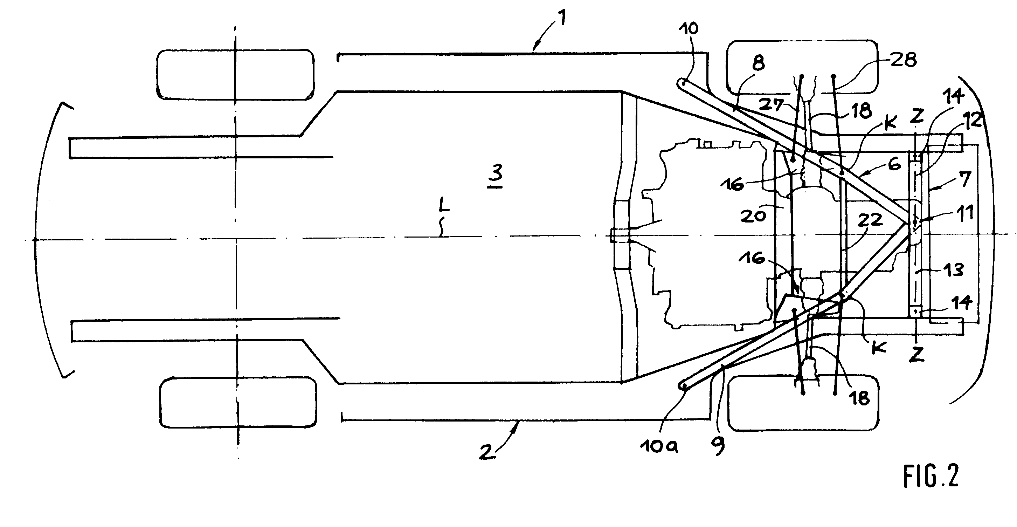

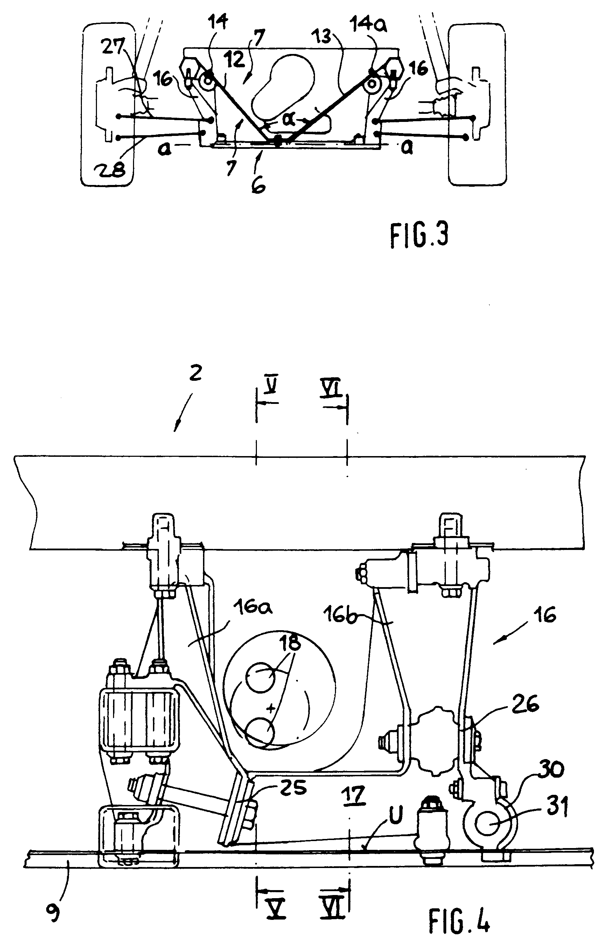

Wie in den Fig. 2 und 3 näher dargestellt, sind die Streben 8 und 9 der ersten horizontalen Verstrebung 6 mit ihrem freien Ende 10, 10a jeweils am Längsträger 1,2 und mit ihrem anderen, etwa in der Längsmittenebene L des Fahrzeugs zusammentreffenden Bereich 11 mit der zweiten vertikalen Verstrebung 7 vorzugsweise in einem Punkt verbunden. Hierzu ist diese zweite Verstrebung 7, bestehend aus den Streben 12 und 13 an ihren freien Enden 14, 14a einerseits mit den Längsträgern 1, 2 verbunden und andererseits nach unten hin unter einem Winkel α zulaufend mit den Streben 8, 9 der ersten Verstrebung 6 verbunden.

Die Verstrebungen 6 und 7 sind in der Weise positioniert, daß ein Verdrehen der freien Enden der Längsträger 1, 2 um eine Längsmittendrehachse bei Torsionsbelastung unterbunden wird. Hierzu ist die zweite Verstrebung 7 möglichst weit nach hinten und an den freien Enden der Längsträger 1, 2 befestigt und die Enden 10, 10a der Streben 8, 9 der ersten horizontalen Verstrebung sind mit den zur Ebene X-X tiefer liegenden Ebene a-a verlaufenden Längsträgern 1, 2 verbunden.

In einem Bereich zwischen der ersten Verstrebung 6 und den Langsträgern 1, 2 der Ebene X-X sind jeweils die seitlichen Trägerteile 16 vorgesehen, die mit den Streben 8, 9 und den Längsträgern 1, 2 geschraubt verbunden sind.

Das Trägerteil 16 besteht aus einem U-förmigen Element, das sich in Fahrzeuglängsrichtung erstreckt und zwei Schenkel 16a, 16b umfaßt, über einen Steg 17 verbunden sind. Das Trägerteil 16 ist in der Weise angeordnet, daß sich eine Antriebswelle 18 zwischen den beiden Schenkeln 16, 16b erstrecken kann. Der Steg 17 ist mit der Strebe 8, 9 und die Enden der Schenkel 16a, 16b sind mit den Längsträgern 1, 2 verbunden.

Zwischen den seitlichen Trägerteilen 16 jeder Seite ist ein Querträger 20 angeordnet. Dieser ist mit seinem freien Ende 20a in eine Aufnahme 21 des Schenkels 16a über Schrauben festgesetzt. Der Querträger 20 weist gekröpfte Enden 20a auf, in der Weise, daß das Mittenteil des Trägers 20 tiefer gelegen als die freien Enden 20a ausgeführt sind.

Bei einer Verwendung von geknickten Streben 8,9, wie z.B. in Fig. 2 dargestellt, ist im Knickbereich K eine Querstange 22 oder dgl. zwischengesetzt. Diese ist endseitig abgeflacht und zwischen der Strebe 8, 9 und dem Trägerteil 16 über mindestens eine Schraube 24 gehalten.

Das Trägerteil 16 ist in den Schenkeln 16a, 16b mit Aufnahmen 25, 26 für Lager von Lenkern 27, 28 bzw. einer Spurstange ausgebildet. Die Verstrebungen 6 und 7 sind somit nicht nur zur Erzielung einer Torsionssteifigkeit ausgebildet, sondern dienen auch mit zur Abstützung der Radaufhängung.

Die Streben 8, 9 und 12, 13 der Verstrebungen 6, 7 bestehen z.B. aus Hutprofilen, wobei der Querträger 20 aus einem polygonalen geschlossenen Profil und die Querstange 22 aus einem Rohr besteht.

Mit dem Trägerteil 16 ist über eine Schelle 30 ein Stabilisator 31 gehalten, der sich quer zum Fahrzeug erstreckt und über ein Gehänge (nicht gezeigt) mit einem Radträger verbunden wird.

Wie in Fig. 2 strichpunktiert dargestellt ist, können Verstrebungen 6 und 7 auch im Vorderwagen angeordnet sein, wobei die Verstrebung 7 auch durch einen Querträger zwischen den beiden Längsträgern 1 und 2 ersetzbar ist bzw. die horizontalen Streben an einem Bodenblech oder einem sonstigen Festigkeitsverbund gehalten werden. Die Verbindung der Verstrebung mit einer Stoßstange oder einem mittigen Abstützbock der Stoßstange ist auch möglich.

## Patentansprüche

1. Kraftfahrzeug mit äußeren seitlichen Längsträgern im Bereich einer Fahrgastzelle, an die sich im Fahrzeugvorbau und/oder im Fahrzeugheck weitere Längsträger anschließen, die insbesondere mit einer Abkröpfung versehen sind und die Fahrzeugkarosserie versteifende Elemente mit den Längsträgern einerseits und/oder einem Unterboden bzw. Unterbodenbauteilen andererseits verbunden sind, dadurch gekennzeichnet, daß die versteifenden Elemente aus einer ersten V-förmigen Verstrebung (6) besteht, die in einer etwa horizontalen Ebene (a-a) verläuft und sich in Fahrzeuglängsrichtung erstreckt und welche mit einer zweiten V-förmigen Verstrebung (7) fest verbunden ist, die in einer etwa vertikalen Querebene (Z-Z) angeordnet ist, wobei die erste Verstrebung (6) mit ihren freien Enden (10) mit den Längsträgern (1,2) und mit ihren abgekehrten Enden an der zweiten Verstrebung (7)in einem etwa in einer Fahrzeuglängsmittenachse (L) gemeinsamen zusammentreffenden Bereich (11) befestigt ist und diese zweite Verstrebung (7) mit ihren freien Enden (14) mit den Längsträgern (1,2) fest verbunden ist.

2. Kraftfahrzeug nach Anspruch 1, **dadurch gekennzeichnet,** daß die erste V-förmige Verstrebung (6) in Verbindung mit der zweiten V-förmigen Verstrebung (7) einen Steifigkeitsverbund bildet und im Hinterwagen und/oder im Vorderwagen des Fahrzeuges angeordnet ist.

3. Kraftfahrzeug nach den Ansprüchen 1 oder 2, **dadurch gekennzeichnet,** daß die erste V-förmige Verstrebung (6) sich aus von außenliegenden Längsträgern (1, 2) bis etwa zur Fahrzeuglängsmittenachse (L) erstreckenden Einzelstreben (8,9) zusammensetzt, die über mindestens eine Querstange (22) in horizontaler Richtung gegeneinander und über die zweite V-förmige Verstrebung (7), bestehend aus Einzelstreben (12,13) in Hochrichtung abgestützt sind.

4. Kraftfahrzeug nach den Ansprüchen 1, 2 oder 3, **dadurch gekennzeichnet,** daß zwischen jeder Strebe (8, 9) der V-förmigen Verstrebung (6) und den Längsträgern (1, 2) jeder Fahrzeugseite sich ein etwa in vertikaler Ebene erstreckendes und in Fahrzeuglängsrichtung ausgerichtetes seitliches Trägerteil (16) angeordnet ist, das mit seiner Unterseite (U) jeweils an einer Strebe (8,9) und mit seiner Oberseite (O) jeweils an einem Längsträger (1,2) über mehrere Bolzen befestigt ist.

5. Kraftfahrzeug nach den Ansprüchen 1 oder einen der vorhergehenden Ansprüche, **dadurch gekennzeichnet,** daß zwischen den Trägerteilen (16) jeder Fahrzeugseite ein Querträger (20) angeordnet ist, der beabstandet zur Querstange (22) verläuft.

6. Kraftfahrzeug nach Anspruch 5, **dadurch gekennzeichnet,** daß der Querträger (20) in einer etwa gemeinsamen vertikalen Ebene (b-b) mit der Befestigung der Trägerteile (16) am Längsträger (1,2 ) am Trägerteil (16) jeder Fahrzeugseite verbunden ist.

7. Kraftfahrzeug nach Anspruch 1 oder einem der vorhergehenden Ansprüche, **dadurch gekennzeichnet,** daß die Trägerteile (16) U-förmig ausgebildet sind, sich in Fahrzeuglängsrichtung erstrecken und zwischen zwei Schenkeln (16a, 16b) die jeweils endseitig mit den Längsträgern (1, 2) verbunden sind, eine Radantriebswelle (18) durchgeführt ist und in jedem Schenkel (16a,16b) mindestens eine Aufnahme (25, 26) für ein Lager von Lenkern (27,28) einer Radaufhängung vorgesehen ist.

8. Kraftfahrzeug nach Anspruch 7, **dadurch gekennzeichnet,** daß an einem Schenkel (16a) über eine Schelle (30) ein Stabilisator (31) in Lage gehalten ist.

9. Kraftfahrzeug nach Anspruch 1 oder einem der vorhergehenden Ansprüche, **dadurch gekennzeichnet,** daß die Streben (8,9 und 2,14) aus Hutprofilen bestehen, die mit ihrem Steg über Schrauben am Trägerteil (16) befestigt sind.

10. Kraftfahrzeug nach Anspruch 1 oder einem der vorhergehenden Ansprüche, **dadurch gekennzeichnet,** daß die erste V-förmige Verstrebung (6) zwei Streben (8, 9) umfaßt, die eine Abknickung aufweisen und in diesem Knickbereich (K) die Querstange (22) befestigt ist und die Streben (8,9)gegeneinander abstützbar sind.

11. Kraftfahrzeug nach Anspruch 1 oder einem der vorhergehenden Ansprüche, **dadurch gekennzeichnet,** daß die Querstange (22) rohrförmig ausgebildet ist und ihre freien Enden (23) abgeflacht sind, welche zwischen dem Trägerteil (16) und der Strebe (8,9) fest eingespannt gehalten sind.

12. Kraftfahrzeug nach Anspruch 1 oder einem der vorhergehenden Ansprüche, **dadurch gekennzeichnet,** daß der Querträger (20) aus einem polygonalen Profil besteht, einen sich bis in die horizontale Ebene (Y-Y) der Verstrebung (6) erstreckenden mittleren Steg umfaßt und die freien Enden (20a) abgekröpft sind und in einer höher gelegenen Ebene als der Steg (17) verlaufen und in Aufnahmen (21) der Trägerteile (16) gehalten und über Schrauben (22) befestigt sind.

## Claims

1. A motor vehicle with external, side longitudinal members in the area of a passenger cell with further longitudinal members attached thereto in the vehicle front and/ or in the vehicle rear and provided in particular with a bend, and the members stiffening the vehicle body are connected to the longitudinal members at one end and/ or to a underbody or underbody parts at the other, **characterised in that** the stiffening members comprise a first V-shaped brace (6) extending in a substantially horizontal plane (a-a) and in the longitudinal direction of the vehicle and rigidly connected to a second V-shaped brace (7) arranged in a substantially vertical transverse plane (Z-Z), wherein the free ends (10) of the first brace (6) are fastened to the longitudinal members (1, 2) and the far ends of the said brace to the second brace (7) in a substantially common, meeting area in a longitudinal central axis (L) of the vehicle, and the free ends (14) of this second brace (7) are securely connected to the longitudinal members (1, 2).

2. A motor vehicle according to Claim 1, **characterised in that** the first V-shaped brace (6) forms a rigid connection with the second V-shaped brace (7) and is arranged in the rear car section and/ or the front car section of the vehicle.

3. A motor vehicle according to Claims 1 or 2, **characterised in that** the first V-shaped brace (6) comprises individual struts (8, 9) extending from external, longitudinal members (1, 2) to the longitudinal central axis (L) of the vehicle and supported by way of at least one cross bar (22) in the horizontal direction with respect to each other and by way of the second V-shaped brace (7) comprising individual struts (12, 13) in the upright direction.

4. A motor vehicle according to Claims 1, 2, or 3, **characterised in that** a side support member (16) extending substantially in the vertical plane and aligned in the longitudinal direction of the vehicle is arranged between each strut (8, 9) of the V-shaped brace (6) and the longitudinal members (1, 2) of each side of the vehicle, and the underside (U) of the support member is fastened to a respective strut (8, 9), and the surface (O) to a respective longitudinal member (1, 2) by way of a plurality of bolts.

5. A motor vehicle according to Claim 1 or any one of the preceding claims, **characterised in that** a transverse member (20) is arranged between the support members (16) of each side of the vehicle and extends at a distance from the cross bar (22).

6. A motor vehicle according to Claim 5, **characterised in that** the transverse member (20) is connected in a substantially common vertical plane (b-b) to the fastening of the support members (16) to the longitudinal member (1, 2) at the support member (16) of each side of the vehicle.

7. A motor vehicle according to Claim 1 or any one of the preceding claims, **characterised in that** the support members (16) are U-shaped, extend in the longitudinal direction of the vehicle, and an outer axle shaft (18) extends between two legs (16a, 16b) with the ends thereof connected to the longitudinal members (1, 2), and each leg (16a, 16b) is provided with at least one mounting (25, 26) for a bearing of guide rods (27, 28) of a wheel suspension system.

8. A motor vehicle according to Claim 7, **characterised in that** an anti-roll bar (31) is held in position on one leg (16a) via a clip (30).

9. A motor vehicle according to Claim 1 or any one of the preceding claims, **characterised in that** the struts (8, 9 and 2, 14) comprise hat sections fastened via their cross-member to the support member (16) by way of screws.

10. A motor vehicle according to Claim 1 or any one of the preceding claims, **characterised in that** the first V-shaped brace (6) comprises two struts (8, 9) having a bend, and in this bend region (K) the cross bar (22) is fastened and the struts (8, 9) are supportable with respect to each other.

11. A motor vehicle according to Claim 1 or any one of the preceding claims, **characterised in that** the cross bar (22) is tubular and its free ends (23) are flattened and are held rigidly clamped between the support member (16) and the strut (8, 9).

12. A motor vehicle according to Claim 1 or any one of the preceding claims, **characterised in that** the transverse member (20) comprises a polygonal section, includes a central cross-member extending into the horizontal plane (Y-Y) of the brace (6), and the free ends (20a) are bent and extend in a higher plane than the cross-member (17) and are held in mountings (21) of the support members (16) and fastened by way of screws (22) [sic-24].

## Revendications

1. Véhicule automobile, avec des longerons latéraux extérieurs, dans la zone d'un habitacle, auxquels se raccordent d'autres longerons, dans la partie avant du véhicule et/ou dans la partie arrière du véhicule, ces autres longerons étant en particulier pourvus d'un coudage, et les éléments rigidifiant la carrosserie du véhicule étant reliés aux longerons, d'une part, et/ou à un dessous de caisse, ou bien à des éléments de dessous de caisse, d'autre part, caractérisé en ce que les éléments de rigidification sont constitués d'un premier entretoisement (6) en forme de V, courant dans un plan (a-a) à peu près horizontal et s'étendant dans la direction longitudinale du véhicule et qui est reliée rigidement à un deuxième entretoisement (7) en forme de V, disposé dans un plan transversal (Z-Z) à peu près vertical, le premier entretoisement (6) étant fixé par ses extrémités libres (10) aux longerons (1, 2) et, par ses extrémités opposées, au deuxième entretoisement (7), dans une zone (11) de coincidence commune située à peu près dans l'axe longitudinal (L) du véhicule et ce deuxième entretoisement (7) étant relié rigidement par ses extrémités libres (14) aux longerons (1, 2).

2. Véhicule automobile selon la revendication 1, caractérisé en ce que le premier entretoisement (6) en forme de V constitue, en liaison avec le deuxième entretoisement (7) en forme de V, un élément composite de rigidification et est disposé dans la partie arrière et/ou dans la partie avant du véhicule.

3. Véhicule automobile selon les revendications 1 ou 2, caractérisé en ce que le premier entretoisement (6) en forme de V est constitué de longerons (1, 2) extérieurs allant à peu près jusqu'à des jambes de force individuelles (8, 9) s'étendant vers l'axe longitudinal (L) du véhicule, qui sont soutenus dans la direction verticale par l'intermédiaire d'au moins une barre transversale (22), en direction horizontale les uns par rapport aux autres, et par le deuxième longeron (7) en forme de V, constitué de jambes de force individuelles (12, 13).

4. Véhicule automobile selon les revendications 1, 2 ou 3, caractérisé en ce que, entre chaque jambe de force (8, 9) de l'entretoisement (6) en forme en V et les longerons (1, 2) de chaque côté du véhicule est disposée une partie de support (16) latérale s'étendant dans un plan vertical et orientée dans la direction longitudinale du véhicule, partie de support (16) qui est fixée par sa face inférieure (U), respectivement, à une jambe de force (8, 9) et, par sa face supérieure (0), respectivement, sur un longeron (1, 2), par l'intermédiaire de plusieurs boulons.

5. Véhicule automobile selon les revendications 1 ou l'une des revendications précédentes, caractérisé en ce qu'une traverse (20), courant à distance de la barre transversale (22) est disposée entre les parties de support (16) de chaque coté du véhicule.

6. Véhicule automobile selon la revendication 5, caractérisé en ce que la traverse (20) est reliée, dans un plan vertical (b-b) à peu près commun, à la fixation des parties de support (16) sur le longeron (1, 2), sur la partie de support (16) de chaque coté de véhicule.

7. Véhicule automobile selon la revendication 1 ou l'une des revendications précédentes, caractérisé en ce que les parties de support (16) sont réalisées en forme de U, s'étendent dans la direction longitudinale du véhicule, et entre deux branches (16a, 16b), reliées chacune à une extrémité aux longerons (1, 2), est passé un arbre d'entraînement de roues (18), et, dans chaque branche (16a, 16b), est prévu au moins un réceptacle (25, 26) pour un palier destiné à des bras articulés (27, 28) d'une suspension de roues.

8. Véhicule automobile selon la revendication 7, caractérisé en ce qu'un stabilisateur (31) est maintenu en position sur une branche (16a), par l'intermédiaire d'un collier de fixation (30).

9. Véhicule automobile selon la revendication 1 ou l'une des revendications précédentes, caractérisé en ce que les jambes de force (8, 9 et 2, 14) sont constituées de profilés chapeau, fixés par leur âme, par l'intermédiaire de vis, sur la partie poutre (16).

10. Véhicule automobile selon la revendication 1 ou l'une des revendications précédentes, caractérisé en ce que le première entretoisement (6) en forme de V comprend deux jambes de force (8, 9), présentant un coudage, et la barre transversale (22) étant fixée dans cette zone d'inflexion (K) et les jambes de force (8, 9) pouvant prendre appui les unes contre les autres.

11. Véhicule automobile selon la revendication 1 ou l'une des revendications précédentes, caractérisé en ce que la barre transversale (22) est de réalisation tubulaire et est aplatie à ses extrémités libres (23) qui sont enserrées rigidement entre la partie poutre (16) et la jambe de force (8, 9).

12. Véhicule automobile selon la revendication 1 ou l'une des revendications précédentes, caractérisé en ce que la traverse (20) est constituée d'un profil polygonal, d'une âme médiane s'étendant jusque dans le plan horizontal (Y-Y) de l'entretoisement (6) et les extrémités libres (20a) étant coudées et s'étendent dans un plan situé à un niveau plus élevé que celui de l'âme (17) et étant maintenues dans des réceptacles (21) des parties de support (16) et fixées par des vis (22).
